# FASCICULE DE BREVET EUROPEEN

(11) **EP 1 521 951 B1**
(45) Date de publication et mention de la délivrance du brevet: **31.10.2007**
(21) Numéro de dépôt: 03755605.7
(22) Date de dépôt: 15.07.2003
(51) Int. Cl.: G01L 5/22, G01L 1/22, B64C 13/00

(54) **APPAREIL DE SURVEILLANCE D'UN VOLET D'AÉRONEF ET APPLICATION D'UNE BROCHE DYNAMOMÉTRIQUE**
APPARAT ZUR ÜBERWACHUNG EINER FLUGZEUGKLAPPE UNTER VERWENDUNG EINES KRAFTMESSDORNS
APPARATUS FOR MONITORING AN AIRCRAFT FLAP AND APPLICATION OF A DYNAMOMETRIC ROD

(30) Priorité: 16.07.2002 FR 0209006
(43) Date de publication de la demande: 13.04.2005
(73) Titulaire: FGP INSTRUMENTATION, F-78340 Les-Clayes-Sous-Bois (FR)
(72) Inventeur: GIBERT, Francis, F- 78490 les Mesnuls (FR)
(74) Mandataire: Arnaud, Jean
(86) Numéro de dépôt international: PCT/FR2003/002231
(87) Numéro de publication internationale: WO 2004/008097

(56) Documents cités:
- EP-A- 0 818 387
- US-A- 3 695 096
- US-A- 6 140 942

## Description

### Domaine technique

La présente invention concerne un appareil de surveillance du fonctionnement d'un volet d'aéronef comprenant une broche dynamométrique, et l'application d'une telle broche à la surveillance de la présence d'un volet d'aéronef.

### Technique antérieure

Le brevet des Etats-Unis d'Amérique n' 3 695 096 décrit une broche dynamométrique munie de jauges de contrainte, destinée à déterminer les contraintes de cisaillement, dans les grues, les treuils, les transporteurs et analogues. La broche dynamométrique comprend un corps cylindrique de section circulaire à l'intérieur duquel sont disposés des éléments sensibles, tels que des jauges de contrainte. L'extrémité destinée au passage de fils connectés aux éléments sensibles est munie d'un presse-étoupe qui assure l'étanchéité. Une telle broche dynamométrique est destinée à la détermination des forces exercées transversalement à sa longueur et elle a au moins une gorge périphérique de dégagement destinée à chevaucher l'interface des éléments articulés. Des logements formés dans ces gorges, à la surface extérieure, contiennent des éléments sensibles. Le presse-étoupe protège l'élément sensible contre les intempéries, mais la broche ne peut pas être utilisée dans les applications nécessitant une résistance particulièrement élevée aux intempéries (variations extrêmes de température, présence d'eau, de glace, de givre, etc.).

L'évolution de la réglementation aéronautique a montré qu'il était de plus en plus souhaitable de connaître l'état de certains éléments actifs, tels que les volets. Par exemple, les ailes des aéronefs modernes sont munies de volets hypersustentateurs qui sont articulés en deux points au moins sur l'aile associée. Ces volets sont montés sur des bras qui comportent le plus souvent des voies dans lesquelles se déplacent des galets, et sur lesquels sont montés les volets eux-mêmes. Il arrive qu'un volet se sépare d'un bras. Dans l'état actuel de la construction aéronautique, ce phénomène n'est pas détecté directement. Il peut cependant provoquer une détérioration importante d'une partie au moins de la voilure.

On a donc envisagé d'incorporer un élément sensible aux forces à chacun des deux points de fixation d'un tel volet. On peut placer un tel élément sensible au niveau de la fixation du volet à un bras, au niveau du vérin qui déplace le volet hypersustentateur ou au niveau et la fixation du bras à l'aile.

Le brevet des Etats-Unis d'Amérique n' 6 140 942, concerne un système de détection de la contamination d'une surface de gouverne d'aéronef, en particulier par givrage. Ce système repose sur la détection du moment appliqué à la gouverne. Le texte indique que le détecteur utilisé peut être un détecteur normal à jauge de contrainte qui détecte le moment appliqué à la gouverne. Il est indiqué que d'autres dispositifs peuvent convenir.

La demande de brevet européen EP-818 387, déposée par Boeing, concerne exactement le problème envisagé selon l'invention, c'est-à-dire la surveillance des volets. La réalisation décrite dans cette demande de brevet met en oeuvre des capteurs comprenant des détecteurs de proximité et des détecteurs de position. La différence entre les données de deux systèmes détecteurs permet de déterminer un défaut de positionnement des volets.

Cependant, aucune de ces solutions envisagées n'a donné satisfaction jusqu'à présent, car d'une part elles présentent le plus souvent une résistance insuffisante aux intempéries pendant leur utilisation (problème d'étanchéité) et, d'autre part, elles nécessitent des modifications plus ou moins importantes des volets hypersustentateurs, du bras de support ou de la partie de voilure qui supporte ces bras (problème de montage).

Les deux inconvénients précités sont si grands que de tels systèmes n'ont pas encore été incorporés à des aéronefs, autrement qu'à titre de prototypes pour des essais.

### Exposé de l'invention

Selon l'invention, le problème de l'étanchéité d'une part et le problème du montage d'autre part sont résolus par simple remplacement d'un élément de la liaison formée entre l'aile et le volet hypersustentateur, de réalisation extrêmement étanche.

Cet objet est atteint grâce à l'application d'une broche dynamométrique qui est destinée à remplacer un pivot d'articulation de volet. Cette broche diffère des axes ou broches dynamométriques connus d'une part parce que ses éléments sensibles sont enfermés à l'intérieur du corps de la broche, qui est fermé par un presse-étoupe, et ne sont donc pas soumis aux intempéries, et d'autre part parce qu'elle possède les caractéristiques extérieures des pivots actuellement utilisés pour le montage des bras de volet, et ne nécessite donc aucune modification des volets, des bras ou de la voilure.

Plus précisément, l'invention concerne un appareil de surveillance du fonctionnement d'un volet d'aéronef, le volet étant monté sur au moins deux bras articulés chacun autour d'un axe sur une partie de surface aérodynamique, l'un au moins des deux bras étant monté sur la surface aérodynamique associée par une articulation qui comprend au moins un pivot, au moins un étrier comportant au moins deux branches ayant des orifices alignés suivant ledit axe pour le passage du pivot, et un organe enclavé ayant un orifice pour le passage du pivot et ayant une plage limitée de déplacement entre les branches de l'étrier dans la direction de l'axe, le pivot possédant un corps cylindrique, une tête ayant une section transversale dépourvue d'une symétrie de rotation afin qu'elle puisse coopérer avec un outil d'entraînement en rotation, et une extrémité filetée opposée. Selon l'invention, le pivot est constitué d'une broche dynamométrique qui comprend un corps de forme cylindrique de section circulaire, une tête ayant section transversale dépourvue d'une symétrie de rotation afin qu'elle puisse coopérer avec un outil d'entraînement en rotation, et une extrémité filetée opposée à la tête, le corps de broche ayant au moins une gorge périphérique de dégagement, le corps de broche a une cavité qui débouche à une extrémité du corps, qui atteint au moins le niveau de la gorge de dégagement au moins, et qui contient au moins un élément sensible aux forces disposé contre la paroi de la cavité au niveau de la gorge de dégagement, l'ouverture de la cavité qui débouche à une extrémité du corps étant fermée de manière étanche aux intempéries tout en permettant le passage de fils connectés à l'élément sensible aux forces au moins, la tête et un écrou vissé sur l'extrémité filetée sont en contact, direct ou indirect, avec les branches de l'étrier, de sorte que la gorge du corps de broche chevauche l'interface entre une branche d'étrier et la partie voisine de l'organe enclavé, la dimension de la plage de déplacement de l'organe enclavé entre les branches de l'étrier et la largeur de la gorge présentent une relation telle qu'un bord de la gorge est placé à l'intérieur de la branche et l'autre bord à l'intérieur de l'organe enclavé, la tête a une position en rotation telle que l'élément sensible au moins est sensible à des forces exercées transversalement à la longueur de la broche, et l'appareil comporte en outre un dispositif de traitement de signaux qui utilise au moins un signal d'un élément sensible au moins de la broche pour déterminer au moins la présence du volet.

De préférence, la broche comporte deux gorges associées chacune à au moins un élément sensible et disposées respectivement aux interfaces du bras avec chacune des branches.

Il est avantageux que la tête de la broche possède un repère de positionnement en rotation de l'élément sensible au moins par rapport à l'étrier ou à l'organe enclavé.

Dans un mode de réalisation, la broche comporte, au niveau d'une gorge au moins, plusieurs éléments sensibles disposés régulièrement en cercle afin que les signaux des éléments sensibles permettent la détermination de la force indépendamment de l'orientation de la broche, par une opération choisie entre la sélection d'un élément sensible ayant une orientation convenable, et le traitement de signaux de plusieurs éléments sensibles pour la détermination d'un signal convenable.

Dans un mode de réalisation, la broche comporte en outre une carte de circuit amplificateur placée entre un élément sensible au moins et des fils sortant de la broche.

Dans un mode de réalisation, la broche possède en outre un presse-étoupe, une sortie étanche, un surmoulage ou un connecteur étanche, destiné au passage de fils reliés à l'élément sensible au moins.

Le volet auquel s'applique l'invention peut être choisi parmi un aileron, un volet hypersustentateur, un aérofrein, une gouverne de profondeur de stabilisateur d'empennage et une gouverne de direction d'empennage.

L'invention concerne aussi une application d'une broche dynamométrique à la détermination de la présence d'un volet d'un aéronef dans le cadre de la surveillance du fonctionnement d'un aéronef, le volet étant monté sur au moins deux bras articulés chacun autour d'un axe sur une partie de surface aérodynamique, l'un au moins des deux bras étant monté sur la surface aérodynamique associée par une articulation qui comprend au moins un pivot, au moins un étrier comportant au moins deux branches ayant des orifices alignés suivant ledit axe pour le passage du pivot, et un organe enclavé ayant un orifice pour le passage du pivot et ayant une plage limitée de déplacement entre les branches de l'étrier dans la direction de l'axe, le pivot possédant un corps cylindrique, une tête ayant une section transversale dépourvue d'une symétrie de rotation afin qu'elle puisse coopérer avec un outil d'entraînement en rotation, et une extrémité filetée opposée à la tête. Selon l'invention, cette application comprend :
la réalisation d'une broche dynamométrique qui comprend un corps de forme cylindrique de section circulaire, une tête ayant une section transversale dépourvue d'une symétrie de rotation afin qu'elle puisse coopérer avec un outil d'entraînement en rotation, et une extrémité filetée opposée à la tête, les dimensions de longueur et de diamètre du corps de la broche étant pratiquement identiques à celles du pivot, le corps de broche ayant au moins une gorge périphérique de dégagement et une cavité qui débouche à une extrémité du corps, qui atteint au moins le niveau de la gorge de dégagement au moins, et qui contient au moins un élément sensible aux forces disposé contre la paroi de la cavité au niveau de la gorge de dégagement, l'ouverture de la cavité qui débouche à une extrémité du corps étant fermée de manière étanche aux intempéries tout en permettant le passage de fils connectés à l'élément sensible aux forces,
le remplacement du pivot par la broche dynamométrique afin que la tête et un écrou vissé sur l'extrémité filetée soient en contact, direct ou indirect, avec les branches de l'étrier, de sorte que la gorge du corps de broche chevauche l'interface entre une branche d'étrier et la partie voisine de l'organe enclavé, la dimension de la plage de déplacement de l'organe enclavé entre les branches de l'étrier et la largeur de la gorge présentant une relation telle qu'un bord de la gorge est placé à l'intérieur de la branche et l'autre bord à l'intérieur de l'organe enclavé,
le réglage de la position de la tête en rotation afin que l'élément sensible au moins soit sensible à des forces exercées transversalement à la longueur de la broche, et
le traitement de signaux d'au moins un signal d'un élément sensible au moins de la broche pour la détermination au moins de la présence du volet.

De préférence, le traitement de signaux est destiné à comparer le signal d'un élément sensible au moins à au moins une valeur de seuil ou à une plage de valeurs. Il est avantageux par exemple que le traitement de signaux soit destiné à comparer les signaux d'au moins deux broches dynamométriques.

### Description sommaire des dessins

D'autres caractéristiques et avantages de l'invention seront mieux compris à la lecture de la description qui va suivre d'exemples de réalisation, faite en référence aux dessins annexés sur lesquels :
la figure 1 représente une broche dynamométrique selon l'invention, destinée à être utilisée à la place d'un pivot de montage de volet d'un aéronef ;
la figure 2 est une coupe longitudinale partielle de la broche de la figure 1 ;
la figure 3 est une coupe d'une broche dans une variante de la figure 1, dans laquelle le corps de broche comporte deux gorges ; et
la figure 4 représente un exemple d'axe dynamométrique connu qui présente les inconvénients des dispositifs de la technique antérieure.

### Meilleure manière de réaliser l'invention

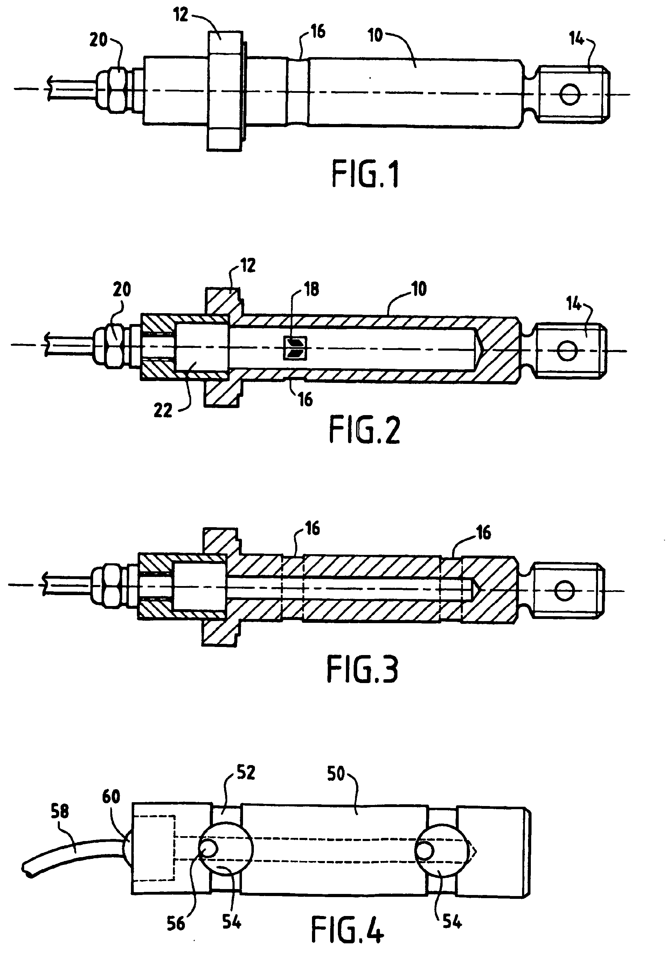

La figure 1 représente un exemple de broche dynamométrique selon l'invention. Celle-ci est destinée à prendre la place d'un pivot de fixation d'un volet hypersustentateur.

La broche possède un corps cylindrique 10 ayant, à une extrémité, une tête hexagonale 12 et, à l'extrémité opposée, un embout fileté 14. Les dimensions et autres caractéristiques du corps 10, de la tête 12 et de l'embout 14 correspondent à celles des pivots normalement utilisés pour la fixation de ces volets hypersustentateurs. L'acier utilisé pour le corps est cependant de préférence d'une qualité très élevée, par exemple du type APX4 de Aubert et Duval.

Le corps 10 possède une gorge 16, qui peut avoir une faible profondeur, de quelques dixièmes de millimètre, puisqu'elle constitue un simple dégagement qui empêche le contact entre une branche d'étrier ou un bras et la broche au niveau de la gorge 16.

La figure 2 indique que, au niveau de la gorge 16, à l'intérieur du corps creux de la broche 10, est disposé au moins un élément sensible 18, par exemple une jauge pelliculaire de cisaillement, telle qu'une jauge de type Vishay N2A 06T 031 L350.

La broche comporte en outre un presse-étoupe 20 monté à l'extrémité du corps 10 afin que les fils de l'élément sensible 18 ou d'autres éléments sensibles éventuellement incorporés et d'un circuit amplificateur éventuellement monté dans un logement 22, puissent sortir de manière étanche du corps. On connaît dans la technique des presse-étoupes qui supportent les conditions extrêmes que peuvent subir ces broches dynamométriques. Dans ces conditions, la température peut varier entre -55 et +125 °C, souvent en présence d'eau, de glace, de givre, et de diverses huiles et graisses, tels que les fluides hydrauliques "Skydrol".

La broche ainsi décrite présente une très bonne étanchéité.

On sait par ailleurs que les axes dynamométriques connus ont une direction préférentielle de détection. Cette direction dépend du positionnement des éléments sensibles sur l'axe dynamométrique.

Dans le cas de la broche des figures 1 et 2, il convient par exemple que le centre de l'élément sensible 18 se trouve dans un plan radial formant un angle de 17,5° avec le plan d'application de la force par le bras monté sur la broche. Contrairement au cas des axes dynamométriques connus qui nécessitent un dispositif de détrompage qui doit coopérer avec un dispositif complémentaire de détrompage sur lequel il est monté, dans le cas de la broche selon l'invention, cette orientation est facilement obtenue par rotation de la broche à l'aide de la tête hexagonale 12, lorsqu'elle est serrée par un boulon monté sur l'embout fileté 14.

Cependant, il peut être intéressant de placer deux éléments sensibles en positions diamétralement opposées ou presque diamétralement opposées.

Dans une autre variante, un ensemble d'éléments sensibles, par exemple au nombre de six, sont répartis à intervalles angulaires réguliers à l'intérieur de la broche, et un circuit électronique de traitement des signaux des différents éléments sensibles détermine le signal à utiliser, soit parce que c'est le signal de l'élément sensible convenablement orienté, soit parce qu'il s'agit d'un signal obtenu par traitement et représentatif du signal que donnerait un élément sensible ayant l'orientation prévue.

On ne décrit pas de tels circuits de traitement, car ils sont bien connus des hommes du métier.

Les figures 1 et 2 représentent une broche dynamométrique n'ayant qu'une seule gorge destinée à être placée à une interface d'un bras et d'un étrier. Cependant, il est possible de réaliser une broche telle que représentée sur la figure 3, ayant deux gorges 16 destinées à être placées aux deux interfaces du bras et des branches de l'étrier.

La figure 4 représente un axe dynamométrique de type connu. Un tel axe comporte un corps 50 de forme cylindrique ayant au moins une gorge 52 destinée à déterminer les régions d'application de force. Des logements 54 sont formés au niveau des gorges pour le logement d'éléments sensibles qui sont reliés chacun, par un trou 56, à un câble 58 qui sort par un presse-étoupe 60. L'utilisation d'un axe tel que représenté sur la figure 4 dans l'application prévue pose de nombreux problèmes. D'abord, il est nécessaire d'obtenir une excellente étanchéité dans tout le logement 54, aussi bien au niveau du fond de gorge 52 qu'à la surface du corps 50. Une telle étanchéité est difficile à obtenir dans les conditions de l'application considérée.

En outre, le positionnement de ces axes dynamométriques est assuré par un dispositif de détrompage. Il est donc nécessaire de modifier soit l'étrier soit le bras de l'aéronef sur lequel doit être monté l'axe pour obtenir le positionnement convenable, grâce au dispositif de détrompage qui est en général une gorge. L'utilisation d'un tel axe nécessite donc une modification d'éléments de l'aéronef, contrairement à l'utilisation des broches dynamométriques selon l'invention.

Bien qu'on ait décrit une broche dont la tête est hexagonale, celle-ci peut être de toute autre forme, correspondant de préférence à celle du pivot qu'elle remplace.

L'invention concerne ainsi un appareil de surveillance du fonctionnement d'un volet d'aéronef, c'est-à-dire soit de la présence du volet (celui-ci ne s'est pas détaché d'un bras), soit de façon plus générale des forces appliquées aux volets, qui permettent de déduire des informations précieuses pour le pilotage des aéronefs.

Bien qu'on ait décrit l'application de l'invention à un volet hypersustentateur, elle convient aussi à d'autres volets d'aéronef, tels que des ailerons, des aérofreins, des gouvernes de profondeur de stabilisateur d'empennage et des gouvernes de direction d'empennage.

L'invention concerne ainsi une application d'une telle broche dynamométrique à 1a détermination de la présence d'un volet d'un aéronef dans le cadre de la surveillance du fonctionnement d'un aéronef.

Bien entendu, diverses modifications peuvent être apportées par l'homme de l'art aux appareils et applications qui viennent d'être décrits uniquement à titre d'exemple non limitatif sans sortir du cadre de l'invention.

## Revendications

1. Appareil de surveillance du fonctionnement d'un volet d'aéronef, le volet étant monté sur au moins deux bras articulés chacun autour d'un axe sur une partie de surface aérodynamique, l'un au moins des deux bras étant monté sur la surface aérodynamique associée par une articulation qui comprend au moins un pivot, au moins un étrier comportant au moins deux branches ayant des orifices alignés suivant ledit axe pour le passage du pivot, et un organe enclavé ayant un orifice pour le passage du pivot et ayant une plage limitée de déplacement entre les branches de l'étrier dans la direction de l'axe, le pivot possédant un corps cylindrique, une tête ayant une section transversale dépourvue d'une symétrie de rotation afin qu'elle puisse coopérer avec un outil d'entraînement en rotation, et une extrémité filetée opposée à la tête,
**caractérisé en ce que**
le pivot est constitué d'une broche dynamométrique qui comprend un corps (10) de forme cylindrique de section circulaire, une tête (12) ayant section transversale dépourvue d'une symétrie de rotation afin qu'elle puisse coopérer avec un outil d'entraînement en rotation, et une extrémité filetée (14) opposée à la tête (12), le corps (10) de broche ayant au moins une gorge périphérique (16) de dégagement,
le corps (10) de broche a une cavité qui débouche à une extrémité du corps, qui atteint au moins le niveau de la gorge (16) de dégagement au moins, et qui contient au moins un élément sensible aux forces (18) disposé contre la paroi de la cavité au niveau de la gorge (16) de dégagement, l'ouverture de la cavité qui débouche à une extrémité du corps étant fermée de manière étanche aux intempéries tout en permettant le passage de fils connectés à l'élément sensible aux forces (18) au moins,
la tête (12) et un écrou vissé sur l'extrémité filetée sont en contact, direct ou indirect, avec les branches de l'étrier, de sorte que la gorge (16) du corps de broche chevauche l'interface entre une branche d'étrier et la partie voisine de l'organe enclavé,
la dimension de la plage de déplacement de l'organe enclavé entre les branches de l'étrier et la largeur de la gorge (16) présentent une relation telle qu'un bord de la gorge (16) est placé à l'intérieur de la branche et l'autre bord à l'intérieur de l'organe enclavé,
la tête (12) a une position en rotation telle que l'élément sensible au moins est sensible à des forces exercées transversalement à la longueur de la broche, et
l'appareil comporte en outre un dispositif de traitement de signaux qui utilise au moins un signal d'un élément sensible (18) au moins de la broche pour déterminer au moins la présence du volet.

2. Appareil selon la revendication 1, **caractérisé en ce que** la broche comporte deux gorges (16) associées chacune à au moins un élément sensible (18) et disposées respectivement aux interfaces du bras avec chacune des branches.

3. Appareil selon l'une des revendications 1 et 2, **caractérisé en ce que** la tête (12) de la broche possède un repère de positionnement en rotation de l'élément sensible (18) au moins par rapport à l'étrier ou à l'organe enclavé.

4. Appareil selon l'une quelconque des revendications précédentes, **caractérisé en ce que** la broche comporte, au niveau d'une gorge (16) au moins, plusieurs éléments sensibles (18) disposés régulièrement en cercle afin que les signaux des éléments sensibles permettent la détermination de la force indépendamment de l'orientation de la broche, par une opération choisie entre la sélection d'un élément sensible (18) ayant une orientation convenable, et le traitement de signaux de plusieurs éléments sensibles (18) pour la détermination d'un signal convenable.

5. Appareil selon l'une quelconque des revendications précédentes, **caractérisé en ce que** la broche comporte en outre une carte de circuit amplificateur placée entre un élément sensible (18) au moins et des fils sortant de la broche.

6. Appareil selon l'une quelconque des revendications précédentes, **caractérisé en ce que** la broche possède en outre un presse-étoupe (20) destiné au passage étanche de fils reliés à l'élément sensible (18) au moins.

7. Appareil selon l'une quelconque des revendications précédentes, **caractérisé en ce que** le volet est choisi parmi un aileron, un volet hypersustentateur, un aérofrein, une gouverne de profondeur de stabilisateur d'empennage et une gouverne de direction d'empennage.

8. Application d'une broche dynamométrique à la détermination de la présence d'un volet d'un aéronef dans le cadre de la surveillance du fonctionnement d'un aéronef, le volet étant monté sur au moins deux bras articulés chacun autour d'un axe sur une partie de surface aérodynamique, l'un au moins des deux bras étant monté sur la surface aérodynamique associée par une articulation qui comprend au moins un pivot, au moins un étrier comportant au moins deux branches ayant des orifices alignés suivant ledit axe pour le passage du pivot, et un organe enclavé ayant un orifice pour le passage du pivot et ayant une plage limitée de déplacement entre les branches de l'étrier dans la direction de l'axe, le pivot possédant un corps cylindrique, une tête ayant une section transversale dépourvue d'une symétrie de rotation afin qu'elle puisse coopérer avec un outil d'entraînement en rotation, et une extrémité filetée opposée à la tête,
**caractérisée en ce qu'**elle comprend
la réalisation d'une broche dynamométrique qui comprend un corps (10) de forme cylindrique de section circulaire, une tête (12) ayant une section transversale dépourvue d'une symétrie de rotation afin qu'elle puisse coopérer avec un outil d'entraînement en rotation, et une extrémité filetée opposée à la tête (12), les dimensions de longueur et de diamètre du corps (10) de la broche étant pratiquement identiques à celles du pivot, le corps (10) de broche ayant au moins une gorge périphérique (16) de dégagement et une cavité qui débouche à une extrémité du corps, qui atteint au moins le niveau de la gorge (16) de dégagement au moins, et qui contient au moins un élément sensible aux forces (18) disposé contre la paroi de la cavité au niveau de la gorge (16) de dégagement, l'ouverture de la cavité qui débouche à une extrémité du corps étant fermée de manière étanche aux intempéries tout en permettant le passage de fils connectés à l'élément sensible aux forces (18),
le remplacement du pivot par la broche dynamométrique afin que la tête (12) et un écrou vissé sur l'extrémité filetée soient en contact, direct ou indirect, avec les branches de l'étrier, de sorte que la gorge (16) du corps de broche chevauche l'interface entre une branche d'étrier et la partie voisine de l'organe enclavé, la dimension de la plage de déplacement de l'organe enclavé entre les branches de l'étrier et la largeur de la gorge (16) présentant une relation telle qu'un bord de la gorge (16) est placé à l'intérieur de la branche et l'autre bord à l'intérieur de l'organe enclavé,
le réglage de la position de la tête (12) en rotation afin que l'élément sensible (18) au moins soit sensible à des forces exercées transversalement à la longueur de la broche, et
le traitement de signaux d'au moins un signal d'un élément sensible (18) au moins de la broche pour la détermination au moins de la présence du volet.

9. Application selon la revendication 8, **caractérisée en ce que** le traitement de signaux est destiné à comparer le signal d'un élément sensible (18) au moins à au moins un élément choisi parmi une valeur de seuil et une plage de valeurs.

10. Application selon la revendication 8, **caractérisée en ce que** le traitement de signaux est destiné à comparer les signaux d'au moins deux broches dynamométriques.

## Claims

1. An apparatus for monitoring the functioning of an aircraft flap, the flap being mounted on at least two arms, each hinged about an axis on a portion of aerodynamic surface, at least one of the two arms being mounted on the associated aerodynamic surface by a joint which comprises at least one pivot, at least one clamp comprising at least two limbs having openings aligned according to said axis for the passage of the pivot, and a pinned member having an opening for the passage of the pivot and having a limited range of displacement between the limbs of the clamp in the direction of the axis, the pivot having a cylindrical body, a head having a cross-section devoid of rotational symmetry so that it can co-operate with a tool for driving in rotation, and a threaded end-piece opposed to the head,
**characterized in that**
the pivot is composed of a dynamometric rod which comprises a cylindrical body (10) of circular section, a head (12) having a cross-section devoid of rotational symmetry so that it can co-operate with a tool for driving in rotation, and a threaded end-piece (14) opposed to the head (12), the rod body (10) having at least one peripheral release groove (16),
the rod body (10) has a cavity which opens at one end of the body, reaches at least to the at least one release groove (16), and contains at least one element sensitive to forces (18) which is arranged against the wall of the cavity at the release groove (16), the aperture of the cavity which opens at one end of the body being sealed closed in a weatherproof manner while permitting the passage of wires connected to the at least one element sensitive to forces (18),
the head (12) and a nut screwed onto the threaded end-piece are in direct or indirect contact with the limbs of the clamp, such that the groove (16) of the rod body straddles the interface between one clamp limb and the adjacent portion of the pinned member,
the dimension of the range of displacement of the pinned member between the limbs of the clamp, and the width of the groove (16), are in a ratio such that one edge of the groove (16) is located inside the limb and the other edge inside the pinned member,
the head (12) has a position in rotation such that the at least one sensitive element is sensitive to forces exerted transversely to the length of the rod, and
the apparatus further includes a signal processing device which uses at least one signal from at least one sensitive element (18) of the rod for determining at least the presence of the flap.

2. An apparatus according to claim 1, **characterized in that** the rod has two grooves (16), each associated with at least one sensitive element (18) and arranged respectively at the interfaces of the arm with each of the limbs.

3. An apparatus according to either claim 1 or claim 2, **characterized in that** the head (12) of the rod has a reference point for the positioning in rotation of the at least one sensitive element (18) in relation to the clamp or to the pinned member.

4. An apparatus according to any one of the preceding claims, **characterized in that** the rod includes, at at least one groove (16), a plurality of sensitive elements (18) arranged regularly in a circle so that the signals of the sensitive elements permit the determination of the force independently of the orientation of the rod, by means of an operation chosen from the selection of a sensitive element (18) having a suitable orientation, and the processing of signals from a plurality of sensitive elements (18) for the determination of a suitable signal.

5. An apparatus according to any one of the preceding claims, **characterized in that** the rod further includes an amplifier circuit card placed between at least one sensitive element (18) and wires emerging from the rod.

6. An apparatus according to any one of the preceding claims, **characterized in that** the rod has in addition a gland (20) intended for the sealed passage of wires connected to the at least one sensitive element (18).

7. An apparatus according to any one of the preceding claims, **characterized in that** the flap is selected from an aileron, a high-lift device, an air brake, a tail unit stabiliser pitch elevator and a tail unit rudder control surface.

8. The application of a dynamometric rod to the determination of the presence of an aircraft flap within the scope of monitoring the functioning of an aircraft, the flap being mounted on at least two arms, each hinged about an axis on a portion of aerodynamic surface, at least one of the two arms being mounted on the associated aerodynamic surface by a joint which comprises at least one pivot, at least one clamp comprising at least two limbs having openings aligned according to said axis for the passage of the pivot, and a pinned member having an opening for the passage of the pivot and having a limited range of displacement between the limbs of the clamp in the direction of the axis, the pivot having a cylindrical body, a head having a cross-section devoid of rotational symmetry so that it can co-operate with a tool for driving in rotation, and a threaded end-piece opposed to the head,
**characterized in that** it comprises
the production of a dynamometric rod which comprises a cylindrical body (10) of circular section, a head (12) having a cross-section devoid of rotational symmetry so that it can co-operate with a tool for driving in rotation, and a threaded end-piece opposed to the head (12), the dimensions of length and diameter of the body (10) of the rod being substantially identical to those of the pivot, the rod body (10) having at least one peripheral release groove (16) and a cavity which opens at one end of the body, reaches at least to the at least one release groove (16), and contains at least one element sensitive to forces (18) which is arranged against the wall of the cavity at the release groove (16), the aperture of the cavity which opens at one end of the body being sealed closed in a weatherproof manner while permitting the passage of wires connected to the element sensitive to forces (18),
the replacement of the pivot by the dynamometric rod so that the head (12) and a nut screwed onto the threaded end-piece are in direct or indirect contact with the limbs of the clamp, such that the groove (16) of the rod body straddles the interface between one clamp limb and the adjacent portion of the pinned member, the dimension of the range of displacement of the pinned member between the limbs of the clamp, and the width of the groove (16), being in a ratio such that one edge of the groove (16) is located inside the limb and the other edge inside the pinned member,
the adjustment of the position of the head (12) in rotation so that the at least one sensitive element (18) is sensitive to forces exerted transversely to the length of the rod, and
the signal processing of at least one signal from at least one sensitive element (18) of the rod for the determination at least of the presence of the flap.

9. The application according to claim 8, **characterized in that** the signal processing is intended to compare the signal from at least one sensitive element (18) with at least one element selected from a threshold value and a range of values.

10. The application according to claim 8, **characterized in that** the signal processing is intended to compare the signals from at least two dynamometric rods.

## Patentansprüche

1. Apparat zur Überwachung der Funktion einer Flugzeugklappe, wobei die Klappe auf mindestens zwei Armen angebracht ist, von denen jeder um eine Achse auf einem Teil der aerodynamischen Oberfläche angelenkt ist, mindestens einer der zwei Arme auf der aerodynamischen Oberfläche angebracht ist, die mit einem Gelenk verbunden ist, welches mindestens einen Drehzapfen aufweist, mindestens ein Bügel mindestens zwei Schenkel aufweist, welche Öffnungen haben, die entlang der Achse für den Durchgang des Drehzapfens ausgerichtet sind, und ein eingepaßtes Organ, das eine Öffnung für den Durchgang des Drehzapfens und einen begrenzten Verschiebungsbereich zwischen den Schenkeln des Bügels in der Richtung der Achse hat, wobei der Drehzapfen einen zylindrischen Körper, einen Kopf mit einem Querschnitt ohne Drehsymmetrie, damit er mit einem Drehantriebswerkzeug zusammenwirken kann, und ein dem Kopf gegenüberliegendes Gewindeende besitzt,
**dadurch gekennzeichnet, daß**
der Drehzapfen aus einem Kraftmeßdorn besteht, der einen Körper (10) in Zylinderform mit kreisrundem Querschnitt, einen Kopf (12) mit Querschnitt ohne eine Drehsymmetrie, damit er mit einem Drehantriebswerkzeug zusammenwirken kann, und ein dem Kopf (12) gegenüberliegendes Gewindeende (14) aufweist, wobei der Körper (10) des Dorns mindestens eine Freigabeumfangsnut (16) hat,
der Körper (10) des Dorn einen Hohlraum hat, der in einem Ende des Körpers mündet, mindestens die Höhe mindestens der Freigabenut (16) erreicht, und mindestens ein auf Kräfte (18) empfindliches Element enthält, das gegen die Wand des Hohlraums auf der Höhe der Freigabenut (16) angeordnet ist, wobei die Öffnung des Hohlraums, welcher in einem Ende des Körpers mündet, gegen Witterungseinflüsse dicht verschlossen ist, wobei zugleich der Durchgang der Drähte, die mit dem mindestens auf die Kräfte (18) empfindlichen Element verbunden sind, erlaubt wird,
der Kopf (12) und eine auf das Gewindeende geschraubte Mutter direkt oder indirekt mit den Schenkeln des Bügels derart in Kontakt sind, daß die Nut (16) des Dornkörpers den Zwischenraum zwischen einem Schenkel des Bügels und dem benachbarten Teil des eingepaßten Organs überlappt,
die Abmessung des Verschiebungsbereiches des eingepaßten Organs zwischen den Schenkeln des Bügels und die Breite der Nut (16) ein derartiges Verhältnis aufweisen, daß ein Rand der Nut (16) im Inneren des Schenkels und der andere Rand im Inneren des eingepaßten Organs angeordnet sind,
der Kopf (12) eine solche Drehposition hat, daß mindestens das empfindliche Element auf die Kräfte empfindlich ist, die quer auf die Länge des Dorns ausgeübt werden, und
der Apparat ferner eine Vorrichtung zur Verarbeitung von Signalen aufweist, welche mindestens ein Signal mindestens eines empfindlichen Elementes (18) des Dorns verwendet, um mindestens die Präsenz der Klappe zu bestimmen.

2. Apparat nach Anspruch 1, **dadurch gekennzeichnet, daß** der Dorn zwei Nuten (16) aufweist, die jede mindestens einem empfindlichen Element (18) zugeordnet ist und jeweils auf den Schnittstellen des Arms mit jedem der Schenkel angeordnet ist.

3. Apparat nach einem der Ansprüche 1 und 2, **dadurch gekennzeichnet, daß** der Kopf (12) des Dorns eine Drehpositionierungs-Markierung mindestens des empfindlichen Elementes (18) bezüglich des Bügels oder des eingepaßten Organs besitzt.

4. Apparat nach einem der vorhergehenden Ansprüche, **dadurch gekennzeichnet, daß** der Dorn auf der Höhe mindestens einer Nut (16) mehrere empfindliche Elemente (18) aufweist, die regelmäßig im Kreis angeordnet sind, damit die Signale der empfindlichen Elemente die Bestimmung der Kraft unabhängig von der Ausrichtung des Doms durch einen Arbeitsgang erlauben, der aus der Auswahl eines empfindlichen Elementes (18) mit einer geeigneten Ausrichtung und der Verarbeitung von Signalen mehrerer empfindlicher Elemente (18) für die Bestimmung eines geeigneten Signals gewählt ist.

5. Apparat nach einem der vorhergehenden Ansprüche, **dadurch gekennzeichnet, daß** der Dorn ferner eine Verstärkerschaltkarte aufweist, die zwischen mindestens einem empfindlichen Element (18) und Drähten angeordnet ist, welche von dem Dorn abgehen.

6. Apparat nach einem der vorhergehenden Ansprüche, **dadurch gekennzeichnet, daß** der Dorn ferner eine Stopfbüchse (20) besitzt, die für den dichten Durchgang der Drähte bestimmt ist, welche mit mindestens dem empfindlichen Element (18) verbunden sind.

7. Apparat nach einem der vorhergehenden Ansprüche, **dadurch gekennzeichnet, daß** die Klappe unter einem Querruder, einer Auftriebsklappe, einer Luftbremse, einem Höhenruder des Leitwerks und einem Seitenruder des Leitwerks ausgewählt ist.

8. Anwendung eines Kraftmeßdorns für die Bestimmung der Präsenz einer Flugzeugklappe im Rahmen der Überwachung der Funktion eines Luftfahrzeuges, wobei die Klappe auf mindestens zwei Armen befestigt ist, die jede um eine Achse auf einem aerodynamischen Oberflächenteil angelenkt ist, mindestens einer der zwei auf der aerodynamischen Oberfläche befestigten Arme einem Gelenk zugeordnet ist, welches mindestens einen Drehzapfen aufweist, wobei mindestens ein Bügel mindestens zwei Schenkel mit Öffnungen aufweist, die entlang der Achse für den Durchgang des Drehzapfens ausgerichtet sind, und ein eingepaßtes Organ eine Öffnung für den Durchgang des Drehzapfens und einen begrenzten Verschiebungsbereich zwischen den Schenkeln des Bügels in der Richtung der Achse hat, der Drehzapfen einen zylindrischen Körper, einen Kopf mit einem Querschnitt ohne eine Drehsymmetrie, damit er mit einem Drehantriebswerkzeug zusammenwirken kann, und ein dem Kopf gegenüberliegendes Gewindeende besitzt,
**dadurch gekennzeichnet, daß** sie aufweist
die Realisierung eines Kraftmeßdoms, der einen Körper (10) mit Zylinderform von kreisrundem Querschnitt, einen Kopf (12) mit einem Querschnitt ohne Drehsymmetrie, damit er mit einem Drehantriebswerkzeug zusammenwirken kann, und ein dem Kopf (12) gegenüberliegendes Gewindeende (14) aufweist, wobei die Abmessungen der Länge und des Durchmessers des Körpers (10) des Dorns praktisch denen des Drehzapfens identisch sind, der Körper (10) des Dorns mindestens eine Freigabeumfangsnut (16) und einen Hohlraum hat, der in einem Ende des Körpers mündet, welcher mindestens die Höhe mindestens der Freigabenut (16) erreicht, und der mindestens ein für Kräfte (18) empfindliches Element enthält, das gegen die Wand des Hohlraums auf der Höhe der Freigabenut (16) angeordnet ist, wobei die Öffnung des Hohlraums, welche in einem Ende des Körpers mündet, gegen Witterungseinflüsse dicht verschlossen ist, wobei zugleich der Durchgang von Drähten erlaubt wird, die mit dem gegen Kräfte (18) empfindlichen Element verbunden sind,
das Ersetzen des Drehzapfens durch den Kraftmeßdom, damit der Kopf (12) und eine auf das Gewindeende geschraubte Mutter mit den Schenkeln des Bügels direkt oder indirekt derart in Kontakt sind, daß die Nut (16) des Dornkörpers die Schnittstelle zwischen einem Schenkel des Bügels und dem benachbarten Teil des eingepaßten Organs überschneidet, wobei die Abmessung des Verschiebungsbereiches des eingepaßten Organs zwischen den Schenkeln des Bügel und der Breite der Nut (16) ein solches Verhältnis aufweisen, daß ein Rand der Nut (16) im Inneren des Schenkels und der andere Rand im Inneren des eingepaßten Organs angeordnet sind,
das Einstellen der Position des Kopfes (12) in Drehung, damit mindestens das empfindliche Element (18) auf quer auf die Länge des Dorns ausgeübte Kräfte empfindlich ist, und
die Signalverarbeitung von mindestens einem Signal mindestens eines empfindlichen Elementes (18) des Dorns für die Bestimmung mindestens der Präsenz der Klappe.

9. Anwendung nach Anspruch 8, **dadurch gekennzeichnet, daß** die Signalverarbeitung dazu bestimmt ist, das Signal mindestens eines empfindlichen Elementes (18) mit mindestens einem Element zu vergleichen, das unter einem Schwellenwert und einem Bereich von Werten ausgesucht ist.

10. Anwendung nach Anspruch 8, **dadurch gekennzeichnet, daß** die Signalverarbeitung dazu bestimmt ist, die Signale von mindestens zwei Kraftmeßdornen zu vergleichen.
